# EUROPÄISCHE PATENTSCHRIFT

(11) **EP 0 691 197 B1**
(45) Veröffentlichungstag und Bekanntmachung des Hinweises auf die Patenterteilung: **14.04.2004**
(21) Anmeldenummer: 95109260.0
(22) Anmeldetag: 14.06.1995
(51) Int. Cl.: B32B 5/08, B32B 17/04, B32B 27/04

(54) **Verfahren zur Herstellung eines Schichtverbundkörpers**
Process for producing a composite material
Procédé de fabrication de corps composite multicouche

(30) Priorität: 06.07.1994 DE 4423739
(43) Veröffentlichungstag der Anmeldung: 10.01.1996
(73) Patentinhaber: Bayerische Motoren Werke Aktiengesellschaft, 80788 München (DE); H. Stoll GmbH & Co., D-72715 Reutlingen (DE)
(72) Erfinder: Mehn, Reinhard, Dr., D-85788 Haimhausen (DE); Stoll, Thomas, D-72762 Reutlingen (DE); Ehrler, Peter, Dr., D-72649 Wolfschlugen (DE)
(74) Vertreter: Schernhammer, Herbert

(56) Entgegenhaltungen:
- DE-A- 3 009 465
- DE-A- 3 935 264
- US-A- 4 150 581
- US-A- 5 118 569

## Beschreibung

Die Erfindung bezieht sich auf ein Verfahren zur Herstellung eines Schichtverbundkörpers mit den Merkmalen des Anspruches 1.

Ein bekannter derartiger Schichtverbundkörper (US 5,118,569 A) hat eine Verstärkungsschicht, die ausschließlich aus parallelen, also unidirektionalen, Verstärkungsgarnen besteht. Dieses Verstärkungsgam wird in einem Strickvorgang mit Matrixgarn verbunden, um den Querabstand der Verstärkungsgame festzulegen. Nach dem ausreichenden Erwärmen und Verpressen dieses Vorformlings ist das Matrixgarn als Garn vollkommen aufgelöst, so daß eine Verstärkung nur in Längsrichtung des Verstärkungsgams gegeben ist. Quer dazu ist der erhaltene Schichtverbundkörper nicht sehr hoch belastbar.

Aus der DE 39 31 452 A1 ist ein Schichtverbundkörper bekannt, der eine Mehrzahl übereinander geschichteter thermoplastischer Kunststoffolien aufweist, die einseitig mit einer Siegelschicht beschichtet sind. In wenigstens einer dieser Siegelschichten aus einem siegelfähigen Polymer ist eine Verstärkungsschicht aus Gelegen, Geweben, Gewirken, Gestricken oder Vliesen dadurch eingebettet, daß der Folienstapel unter Hitzeanwendung verpreßt wird. Das siegelfähige Polymer erweicht dabei soweit, daß es im Schmelzzustand die Verstärkungsschicht allseitig einhüllen und auch deren freien Querschnitte bzw. Poren ausfüllen kann. Die Verwendung einer Mehrzahl von Folien und das vorherige Aufbringen der polymeren Siegelschichten erscheint aufwendig. Auch dürfte die Fertigung von Schichtverbundkörpern mit etwas komplexeren Raumformen schwierig sein und einen beträchtlichen Verschnittabfall mit sich bringen.

Es ist ferner weithin bekannt, Verbundwerkstoffe mit thermoplastischer und duroplastischer Matrix mit Verstärkungssystemen hochfest zu machen. Als Verstärkungssysteme sind sogenannte UD-Gelege (unidirektionale, parallel abgelegte Endlosfasern ohne Verstärkung in der Querrichtung), aber auch Gewebe und Geflechte bekannt. Die Verformbarkeit in der Verstärkungsebene ist bei Geweben und Geflechten eingeschränkt. Trotzdem können dreidimensionale Schichtverbundkörper erreicht werden, wobei die Scherfähigkeit von Geweben in ihrer Ebene und die Gleitfähigkeit der einzelnen Gewebelagen relativ zueinander während der Umformung dies in begrenztem Maß ermoglichen.

Es besteht bei UD-Gelegen aufgrund der fehlenden Querverbindung die Gefahr, daß die Fasern beim Formvorgang auseinanderdriften. Zum einen wird durch den geringeren, veränderten Anteil der Verstärkungsfasern sowohl die Lastübertragung als auch die Steifigkeit in Richtung der Faserlängsachse in diesen Bereichen stark eingeschränkt. Zum anderen können quer zur Faserlängsrichtung dann keine nennenswerten Kräfte mehr übertragen werden. Geflechte sind eher auf rotationssymmetrische Anwendungen zugeschnitten.

Der Erfindung liegt die Aufgabe zugrunde, ein Verfahren zur Herstellung eines Schichtverbundstoffes zu schaffen, mit dem eine hohe Umformfähigkeit des Verstärkungssystems erreichbar ist, so daß auch komplexere Bauteile mit geringem Materialabfall herstellbar sind.

Diese Aufgabe wird erfindungsgemäß durch das im Patentanspruch 1 angegebene Verfahren gelöst. Die Verwendung eines Flachgestricks als Verstärkungsschicht verleiht dieser eine besonders gute Umformfähigkeit, was insbesondere auf die sehr große Dehnfähigkeit bzw. Stauchfähigkeit der Masche von jeweils bis zu 100 Prozent zurückzuführen ist. Dies eröffnet Einsatzbereiche für geometrisch komplexe Strukturkomponenten, wie es beispielsweise Knoten von Faserverbundwerkstoff-Rahmentragwerken von Kfz-Sitzen oder auch von Kfz-Türen sind. Die Bereitstellung der thermoplastischen Matrix durch den textiltechnischen Eintrag von Thermoplastgarnen während der Herstellung eines Flachgestrickes ermöglicht eine kostengünstige und bauteilgerechte Fertigung des Halbzeuggestrickes. Für die Fertigung der Strukturkomponenten, beispielsweise eines Knotens für die schon erwähnten Tragwerke, ist nur ein einziges einstückiges Halbzeug in Form des Flachgestricks erforderlich. Mit der Flachstricktechnik sind auch kompliziertere konturgerechte Verstärkungsschichten herstellbar, wodurch es möglich wird, keinen oder kaum nennenswerten Verschnitt in Kauf nehmen zu müssen. Dadurch daß die thermoplastische Matrix als Garnanteil oder in Form eines Teils der verwendeten Garne direkt in das Flachgestrick eingetragen ist, braucht nur das Flachgestrick verformt und bei geeigneten Temperaturen verpreßt zu werden, so daß der fließfähige Thermoplast sich in die verbleibenden Zwischen- und Hohlräume der verwendeten Garne des Flachgestricks verteilt. Nach dem Erkalten wird ein hochfestes Strukturbauteil erhalten. Die nicht schmelzbaren Faden, in der Regel aus Aramid, Karbon oder insbesondere aus Glas, können durch das Flachstrickverfahren unidirektional abgelegt und in der Hauptbelastungsrichtung des Bauteils orientiert werden.

Während in der Faserlängsrichtung der unidirektional angeordneten Verstärkungsfasern im Flachgestrick entsprechend der Verstärkungsfaser und deren Anteil sehr hohe Kräfte - bei kleinen Maximaldehnungen - vorliegen, ermöglichen die quer zur Verstärkungsfaser angeordneten Maschen, die aus Verstärkungsfasern und Thermoplastfasern bestehen können, die außergewöhnlich hohe Dehnfähigkeit. Diese querliegenden Maschen ermöglichen neben der hohen Flexibilität des Flachgestrickes und damit seiner außergewöhnlich guten Formfähigkeit eine Fixierung der UD-Verstärkungsgarne zueinander, wodurch gute Handlingseigenschaften und eine sichere Positionierung der Verstärkungsfasern während der Halbzeugherstellung gesichert werden können. Die Maschen besitzen im ungestreckten Zustand - wie oben erwähnt - sehr hohe Dehnfähigkeiten, was insbesondere auch im Umformprozeß die außergewöhnlich gute Formfähigkeit dieses Verstärkungsbebildes begründet. Infolge der auftretenden Verstreckungen der Maschen im Formprozeß nehmen - in Abhängigkeit vom Verstreckungsgrad - die später erhaltenen Formkörper in Querrichtung höhere Steifigkeiten und Festigkeiten an.

Weitere vorteilhafte Einzelheiten ergeben sich aus den Unteransprüchen.

Die Erfindung ist im folgenden anhand eines in der Zeichnung mehr schematisch dargestellten Ausführungsbeispiels näher erläutert. Es zeigen
- Figur 1: die Draufsicht auf ein Flachgestrick, stark schematisiert;
- Figur 2: eine der Figur 1 entsprechende Ansicht, in Richtung der Masche stärker verformt, einbebettet in eine thermoplastische Matrix;
- Figur 3: eine schematisierte Darstellung eines Teils eines Fensterrahmens einer Kfz-Tür;
- Figur 4: eine Auschnittsdarstellung eines Bereichs des Fensterrahmens nach Figur 3;
- Figur 5: ein lediglich angedeutetes Flachgestrick und ein Thermoformwerkzeug;
- Figur 6: ein Strukturbauteil, das nach dem neuen Verfahren herstellbar ist;
- Figur 7: verschiedene Einzelschichten als Flachgestricke und
- Figur 8: eine schematisierte Darstellung aufeinanderfolgender Verfahrensschritte.

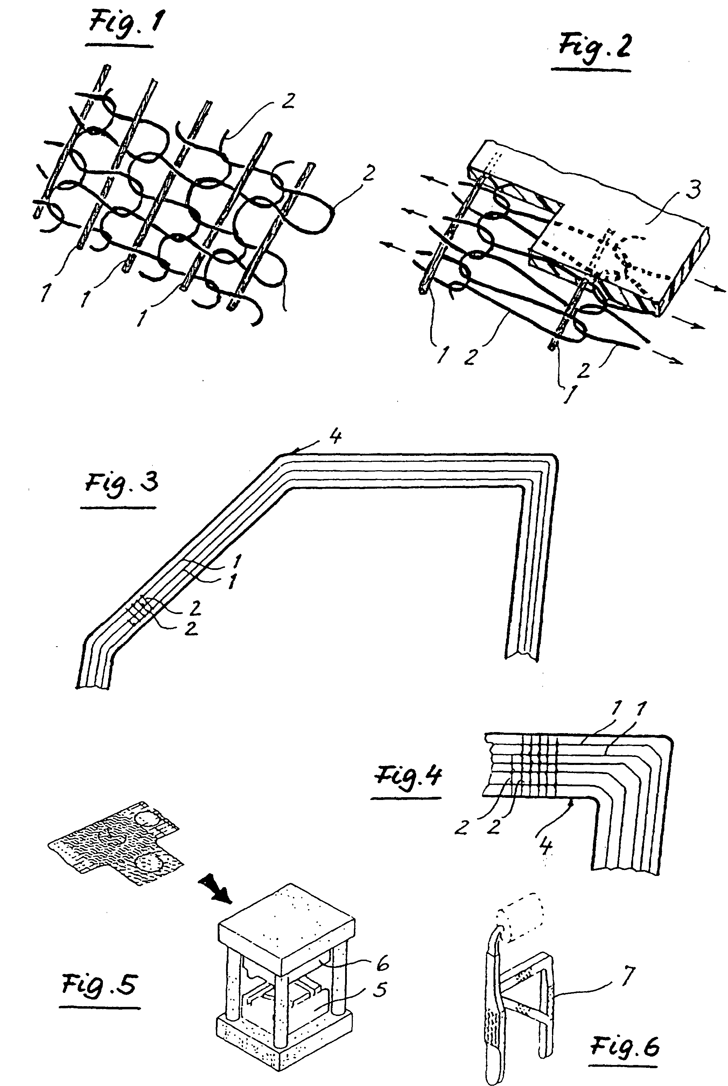

In Figur 1 der Zeichnung ist stark schematisiert ein Flachgestrick angedeutet, das im wesentlichen aus den Schußfäden 1 und den Maschefäden 2 besteht. Als Fasermaterial für die Fäden kann Glas, Karbon oder Aramid verwendet werden. Das Fasermaterial kann als sogenanntes Hybridgarn auch zusätzlich thermoplastische Garnanteile enthalten. Die Schußfäden 1 befinden sich in dem Flachgestrick in einem nahezu ungewellten Zustand und wirken im wesentlichen als Verstärkungsanteil des Flachgestricks. Der quer dazu verlaufende Eintrag der Maschefäden 2 dient der seitlichen Positionierung der Schußfäden 1. Die Masche kann - ähnlich wie der Schußfaden 1 - entweder aus Hybridgarn, aus einem gegenüber dem Schußgarn erheblich feineren Verstärkungsgarn mit eingearbeiter Thermoplastimprägnierung oder aus parallel eingearbeitetem Verstärkungsgarn und Thermoplastgarn bestehen. Die Maschefäden 2 bewirken nach Verarbeitung des Flachgestricks zu dem fertigen Schichtverbundkörper auch eine Querfixierung des Schichtverbundkörpers in Maschenrichtung. Die Maschefäden 2 können infolge von Verstreckungen in Maschenrichtung auch eine deutliche Verstärkung bewirken. Die Hauptlast wird aber durch die Schußfäden 1 abgetragen.

In Figur 2 ist das Flachgestrick nach erfolgter Aufschmelzung des thermoplastischen Matrixmaterials und der Querverformung zusätzlich mit dem Schichtverbundkörper 3 angedeutet. Die Schußfäden 1 haben einen größeren Querabstand voneinander und die Maschefäden 2 liegen in dem Flachgestrick nicht mehr so locker vor wie im unverformten Zustand gemäß Figur 1, sondern besitzen mehr oder wenig stark ausgeprägte parallel verlaufende Verstärkungsgarne in der Querrichtung.

Wie schon erwähnt, kann der thermoplastische Kunststoff als Garnanteil oder auch in Form eines Teils der verwendeten Fäden eingetragen werden. Vorzugsweise sind die Schußfäden 1 des Flachgestricks das Verstärkungsgarn und die den thermoplastischen Kunststoff aufweisenden Garne liegen gleichfalls in Schußfadenrichtung. Sie können aber auch zusätzlich in den Maschen angeordnet sein. Die thermoplastischen Garnanteile können als Multifilamente zwischen den Multifilamenten des Verstärkungsgarnes bzw. der Schußfäden 1 angeordnet sein. Dabei kann es sich,auch als zweckmäßig erweisen, die thermoplastischen Filamente im Inneren des Garns zu konzentrieren und/oder im äußeren Querschnittsbereichs des Garns locker anzuordnen. Es ist aber auch denkbar, ein Garn zu verwenden, das den thermoplastischen Garnanteil als im Coextrusionsverfahren aufgebrachte Ummantelung von Multifilamenten aufweist.

Mit dem Flachstrickverfahren ist es möglich, das Flachgestrick den Konturen des fertigen Schichtverbundkörpers entsprechend zu stricken, ohne daß das Flachgestrick unter Inkaufnahme eines größeren Beschnitt-Abfalls noch beschnitten werden müßte. Auch Randeinfassungen, die ein gezieltes Fixieren des imprägnierten Flachgestricks während des Unmformvorgangs ermöglichen, können im Flachstrickprozeß eingearbeitet werden. Ferner kann innerhalb des ebenen Flachgestricks bedarfsweise die Struktur des Gestricks variiert werden, ebenso können sowohl für die Schußfäden 1 als auch für Maschefäden 2 in einem Gestrick unterschiedlich aufgebaute Garne eingesetzt werden.

Mit dem Flachstrickverfahren gelingt es, die kraftabtragenden Schußfäden 1, wie in Figur 3 grob schematisch angedeutet, dem Kraftfluß des verformten Schichtverbundkörpers entsprechend in dem Flachgestrick abzulegen. In Figur 3 ist der Fensterrahmen 4 einer Kraftfahrzeug-Tür angedeutet. Man erkennt, daß die das Verstarkungsgarn bildenden Schußfäden 1 in jedem Bereich des Fensterrahmens 4 in dessen Längserstreckung verlaufen, während die Maschefäden 2 quer dazu angeordnet sind.

Die Auschnittsdarstellung nach Figur 4 zeigt, daß unter Umständen in Eckbereichen die Schußfäden 1 auch mehrfach abgelenkt angeordnet sein können. In Verzweigungsbereichen des Strukturbauteiles, beispielsweise an einem Knoten, kann es auch erforderlich werden, ein einem abzweigenden Bauteilarm zugeordnetes Flachgestrick mit einem zweiten, dem restlichen Bauteil zugeordneten Flachgestrick vernähen zu müssen.

Wie sich gezeigt hat, kann der gesamte im fertigen Schichtverbundkörper vorliegende thermoplastische Kunststoff als Garnanteil oder als zusätzlich während der Flachgestrickherstellung eingearbeitete Garne bereitgestellt werden. Ein Gewichtsverhältnis von Glas/Thermoplast im Bereich von 50/50 bis 75/25 hat sich als geeignet erwiesen. Die Schußfäden 1 können insgesamt 100 bis 1000 tex haben, die Maschefäden müssen deutlich feiner sein und können eine Garnfeinheit von 30 bis maximal 100 tex aufweisen.

Der in Figur 2 angedeutete Schichtverbundkörperr 3 wird in der Weise hergestellt, daß in einem ersten Schritt der Thermoplast des Schichtverbundkörpers, als Anteil des oben beschriebenen Flachgestrickes, in einer Heizstation aufgeschmolzen wird und anschließend zwischen zwei ebene Preßplatten zu einer ebenen Halbzeugplatte konsolidiert wird. In diesem Konsolidierungsschritt wird das textiltechnisch eingearbeitete Thermoplastgarn bzw. werden die Thermoplastfilamente aufgeschmolzen und es findet ein Transport des schmelzflüssigen Thermoplasten in die noch freien Zwischenräume in den Verstärkungsgarnen statt. Dadurch wird die Einbettung der Verstärkungsfilamente in die thermoplastische Matrix sichergestellt.

Anschließend wird der konsolidierte Schichtverbundkörper, der noch deutlich über der Schmelztemperatur des gewählten Thermoplasten liegt, zwischen die zwei Formhälften des Umformwerkzeuges sehr schnell transportiert und umgeformt. Diese gesamte Halbzeugherstellung und Bauteilumformphase ist exemplarisch für ein glasfaserverstärktes Flachgestrick mit Polyamidimprägnierung in Figur 8 dargestellt. Wegen der außerordentlichen Dehnfähigkeit bzw. Stauchfähigkeit der Masche - wie schon erwähnt bis zu 100 Prozent - kommt es auch bei geometrisch komplexeren Strukturkomponenten dabei zu keinen nennenswerten Faltenbildungen. Die zwei in Figur 5 angedeuteten Formhälften 5 und 6 sind beheizbar, so daß der in das Flachgestrick eingetragene thermoplastische Kunststoff beim Verpressen des verformten Flachgestricks schmilzt und die zwischen den verbleibenden Garnen vorhandenen Zwischenräume ausfüllt sowie auch eine relativ geschlossene Oberfläche gewährleistet.

Das erhaltene Strukturbauteil, gemaß Figur 6 beispielsweise ein Rahmentragwerk 7 für die Rückenlehne eines Kraftfahrzeug-Sitzes, ist hochbelastbar bei trotzdem vergleichsweise sehr geringem Gewicht. Für viele Bauteile sind lediglich zwei Schichtverbundstapel als Halbzeug erforderlich. Die beschriebene Methode bietet die Möglichkeit erhöhter Funktionsintegration in das Bauteil und damit der Teilereduzierung. Bauteil-Halbschalen können zeitsparend umgeformt und anschließend kostengünstig miteinander verschweißt werden, etwa durch Hochfrequenz-, Preß-, Vibrationsschweißen.

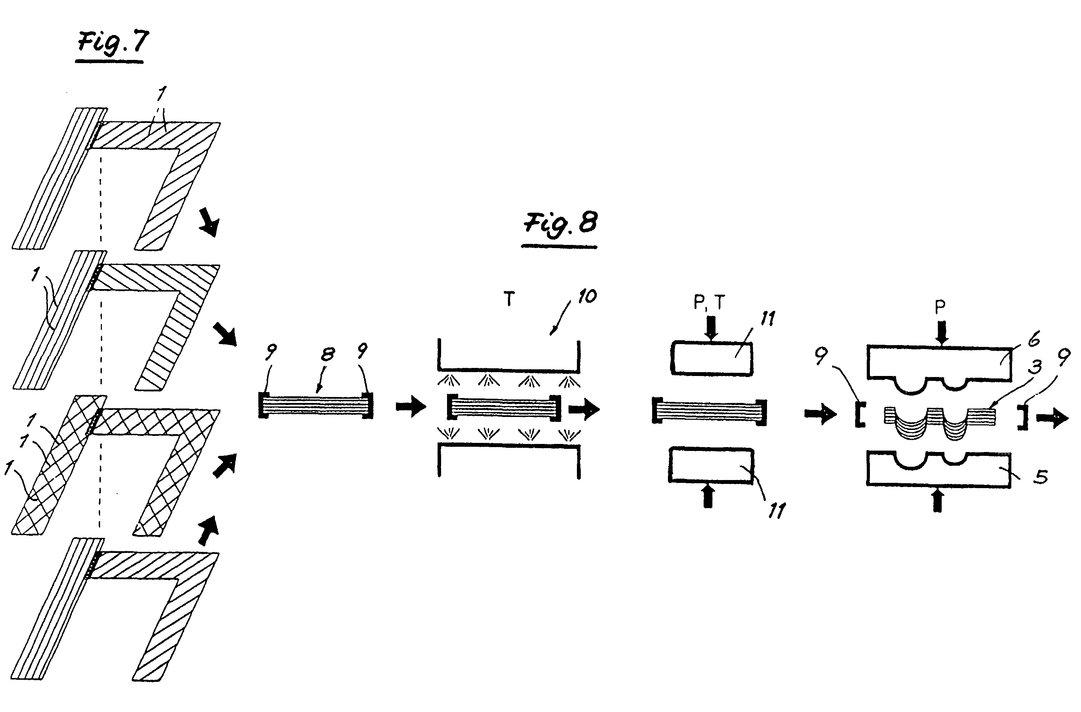

In Figur 7 der Zeichnung sind verschiedene Einzel-Flachgestricke dargestellt und die Schußfäden 1 angedeutet. Man erkennt, daß die Orientierung der Schußfaden in den einzelnen Schichten ganz verschieden sein kann.

In Figur 8 ist schematisch gezeigt, daß die Einzelschicht-Flachgestricke zu einem Stapel 8 zusammengeführt werden können. Der Einzelschicht-Stapel 8 wird dann durch Greifwerkzeuge 9 erfaßt und in eine IR-Heizstation 10 transportiert. Nach Erreichen einer von dem verwendeten Thermoplasten und von der Bauteilform sowie von der Anzahl der Schichten abhängigen Temperatur gelangt der Einzelschicht-Stapel 8 zwischen zwei ebene und beheizte Preßplatten 11. Durch den hier ausgeübten Druck und die übertragene Temperatur wird der Stapel vorkonsolidiert und dann, zweckmäßig ohne größere Abkühlung, zwischen die zwei schematisch angedeuteten Formhälften 5 und 6 eines beheizten Umformwerkzeuges gebracht. Hier findet eine Umformung und Pressung in weitgehend die endgültige Werkstückform statt. Nach dem öffnen der Thermoformanlage kann der fertige Schichtverbundkörper 3 der Thermoformanlage entnommen werden.

## Patentansprüche

1. Verfahren zur Herstellung eines Schichtverbundkörpers in Form eines faserverstärkten, thermoplastischen Verbundstoffes,
**dadurch gekennzeichnet, dass** ein Flachgestrick mit nicht schmelzbaren Fäden, das als Garnanteil oder in Form eines Teils der verwendeten Fäden (Schussfäden 1, Maschefäden 2) thermoplastischen Kunststoff aufweist, aufgeschmolzen wird, wobei der fließfähige thermoplastische Kunststoff sich in die verbleibenden Zwischen- und Hohlräume der verwendeten Garne des Flachgestricks verteilt, wobei das Flachgestrick auch nach der Aufschmelzung des thermoplastischen Kunststoffs verschieden orientierte und miteinander verbundene Fäden aufweist, die in die thermoplastische Matrix eingebettet sind.

2. Verfahren nach Anspruch 1,
**dadurch gekennzeichnet, dass** das Flachgestrick in einem ersten Schritt unter Hitzeeinwirkung zu einer ebenen konsolidierten Halbzeugplatte verpresst wird.

3. Verfahren nach Anspruch 1,
**dadurch gekennzeichnet, dass** mehrere, übereinander angeordnete Flachgestricke in einem ersten Schritt unter Hitzeeinwirkung zu einer ebenen konsolidierten Halbzeugplatte verpresst werden.

4. Verfahren nach Anspruch 2 oder 3,
**dadurch gekennzeichnet, dass** die Halbzeugplatte aus der ebenen Form unter Hitze- und Druckeinwirkung in die endgültige Bauteilform verpresst wird.

5. Verfahren nach einem der vorangegangenen Ansprüche,
**dadurch gekennzeichnet, dass** die Schussfäden (1) des Flachgestricks das Verstärkungsgam und den thermoplastischen Kunststoff aufweisen.

6. Verfahren nach einem der vorangegangenen Ansprüche,
**dadurch gekennzeichnet, dass** die thermoplastischen Garnanteile als Filamente zwischen den Filamenten des Verstärkungsgarnes (Schussfaden 1) angeordnet sind.

7. Verfahren nach einem der vorangegangenen Ansprüche,
**dadurch gekennzeichnet, dass** die thermoplastischen Filamente im Inneren des Garns konzentriert und im äußeren Querschnittsbereich locker angeordnet sind.

8. Verfahren nach einem der vorangegangenen Ansprüche,
**dadurch gekennzeichnet, dass** ein Garn verwendet wird, das den thermoplastischen Garnanteil als Ummantelung der Verstärkungsmultifilamente aufweist.

9. Verfahren nach einem der vorangegangenen Ansprüche,
**dadurch gekennzeichnet, dass** das Flachgestrick aus reinem Verstärkungsgarn und Thermoplastgarn gebildet ist.

10. Verfahren nach einem der vorangegangenen Ansprüche;
**dadurch gekennzeichnet, dass** die Schussfäden (1) aus Verstärkungsgarn und die Maschefäden (2) aus einem feineren Verstärkungsgarn bestehen.

11. Verfahren nach einem der vorangegangenen Ansprüche,
**dadurch gekennzeichnet, dass** das Flachgestrick den Konturen des fertigen Schichtkörpers entsprechend gestrickt wird.

12. Verfahren nach einem der vorangegangenen Ansprüche,
**dadurch gekennzeichnet, dass** die Schussfäden (1) dem Kraftfluß des verformten Schichtkörpers (Fensterrahmen 4) entsprechend in dem Flachgestrick abgelegt sind.

13. Verfahren nach einem der vorangegangenen Ansprüche,
**dadurch gekennzeichnet, dass** die Schussfäden (1) in Eck- oder Verzweigungsbereichen umgelenkt sind.

14. Verfahren nach einem der vorangegangenen Ansprüche,
**dadurch gekennzeichnet, dass** der als Garnanteil oder als Fäden im nicht geschmolzenen Flachgestrick verwendete thermoplastische Kunststoff den gesamten thermoplastischen Kunststoff des fertigen Schichtkörpers bereitstellt.

15. Verfahren nach einem der vorangegangenen Ansprüche,
**dadurch gekennzeichnet, dass** ein Verstärkungsgarn (Schussfaden 1) mit ca. 100 bis 1000 tex und ein Maschengarn (Maschefaden 2) mit 30 bis 100 tex verwendet wird.

## Claims

1. Method for producing a laminate in the form of a fibre-reinforced, thermoplastic composite, **characterized in that** a flat knitted fabric with non-fusible threads which has thermoplastic material as the yarn component or in the form of some of the threads used (weft threads 1, loop threads 2) is made to melt, the free-flowing thermoplastic material distributing itself into the remaining interspaces and cavities of the yarns used for the flat knitted fabric, the flat knitted fabric continuing even after the melting of the thermoplastic material to have differently oriented and interconnected threads, which are embedded in the thermoplastic matrix.

2. Method according to Claim 1, **characterized in that**, in a first step, the flat knitted fabric is pressed under the effect of heat into a planar consolidated semifinished sheet.

3. Method according to Claim 1, **characterized in that**, in a first step, a number of flat knitted fabrics arranged one on top of the other are pressed under the effect of heat to form a planar consolidated semifinished sheet.

4. Method according to Claim 2 or 3, **characterized in that** the semifinished sheet is pressed under the effect of heat and pressure from the planar form into the final component form.

5. Method according to one of the preceding claims, **characterized in that** the weft threads (1) of the flat knitted fabric have the reinforcing yarn and the thermoplastic material.

6. Method according to one of the preceding claims, **characterized in that** the thermoplastic yarn components are arranged as filaments between the filaments of the reinforcing yarn (weft threads 1).

7. Method according to one of the preceding claims, **characterized in that** the thermoplastic filaments are concentrated in the interior of the yarn and are loosely arranged in the outer cross-sectional region.

8. Method according to one of the preceding claims, **characterized in that** a yarn which has the thermoplastic yarn component as a covering of the reinforcing multifilaments is used.

9. Method according to one of the preceding claims, **characterized in that** the flat knitted fabric is formed from pure reinforcing yarn and thermoplastic yarn.

10. Method according to one of the preceding claims, **characterized in that** the weft threads (1) comprise reinforcing yarn and the loop threads (2) comprise a finer reinforcing yarn.

11. Method according to one of the preceding claims, **characterized in that** the flat knitted fabric is knitted in a way corresponding to the contours of the finished laminate.

12. Method according to one of the preceding claims, **characterized in that** the weft threads (1) are laid in the flat knitted fabric in a way corresponding to the distribution of forces in the shaped laminate (window frame 4).

13. Method according to one of the preceding claims, **characterized in that** the weft threads (1) are deflected in corner or branching regions.

14. Method according to one of the preceding claims, **characterized in that** the thermoplastic material used as the yarn component or as the threads in the non-melted flat knitted fabric provides the entire thermoplastic material of the finished laminate.

15. Method according to one of the preceding claims, **characterized in that** a reinforcing yarn (weft threads 1) with about 100 to 1000 tex and a loop yarn (loop threads 2) with 30 to 100 tex is used.

## Revendications

1. Procédé de fabrication d'un corps composite feuilleté qui présente la forme d'un matériau composite thermoplastique renforcé de fibres, **caractérisé en ce qu'**un tricot plat de fils non fusibles qui présente une matière synthétique thermoplastique comme composant de fil ou comme partie des fils utilisés (fils de trame 1, fils de maille 2) est fondu, la matière synthétique thermoplastique apte à s'écouler se répartissant dans les espaces intermédiaires et les espaces vides qui restent entre les fils utilisés pour le tricot plat, le tricot plat présentant, même après la fusion de la matière synthétique thermoplastique, des fils orientés différemment et reliés les uns aux autres qui sont incorporés dans la matrice thermoplastique.

2. Procédé selon la revendication 1, **caractérisé en ce que** le tricot plat est comprimé en une étape sous l'action de la chaleur pour obtenir une plaque semi-finie plane et solidifiée.

3. Procédé selon la revendication 1, **caractérisé en ce que** dans une première étape, plusieurs tricots plats disposés les uns au-dessus des autres sont comprimés sous l'action de la chaleur pour obtenir une plaque de produit semi-fini plane et solidifiée.

4. Procédé selon les revendications 2 ou 3, **caractérisé en ce que** la plaque semi-finie de forme plane est comprimée pour obtenir la forme finale du composant sous l'action de la chaleur et de la pression.

5. Procédé selon l'une des revendications précédentes, **caractérisé en ce que** les fils de trame (1) du tricot plat présentent le fil de renfort et la matière synthétique thermoplastique.

6. Procédé selon l'une des revendications précédentes, **caractérisé en ce que** les fils thermoplastiques sont disposés sous la forme de filaments entre les filaments du fil de renfort (fil de trame 1).

7. Procédé selon l'une des revendications précédentes, **caractérisé en ce que** les filaments thermoplastiques sont concentrés à l'intérieur du fil et sont disposés de manière plus lâche dans la partie extérieure de la section transversale.

8. Procédé selon l'une des revendications précédentes, **caractérisé en ce que** l'on utilise un fil dont la partie thermoplastique constitue l'enveloppe des multifilaments de renfort.

9. Procédé selon l'une des revendications précédentes, **caractérisé en ce que** le tricot plat est formé d'un fil de renfort pur et d'un fil thermoplastique.

10. Procédé selon l'une des revendications précédentes, **caractérisé en ce que** les fils de trame (1) sont constitués d'un fil de renfort et les fils de maille (2) d'un fil de renfort plus fin.

11. Procédé selon l'une des revendications précédentes, **caractérisé en ce que** le tricot plat est tricoté en correspondance au contour du corps feuilleté terminé.

12. Procédé selon l'une des revendications précédentes, **caractérisé en ce que** les fils de trame (1) sont posés dans le tricot plat en correspondance à la direction des forces exercées sur le corps feuilleté déformé (encadrement de fenêtre 4).

13. Procédé selon l'une des revendications précédentes, **caractérisé en ce que** les fils de trame (1) sont déviés dans la zone des coins ou des ramifications.

14. Procédé selon l'une des revendications précédentes, **caractérisé en ce que** la matière synthétique thermoplastique utilisée pour les fils ou les filaments dans le tricot plat non fondu constitue la totalité de la matière synthétique thermoplastique du corps feuilleté terminé.

15. Procédé selon l'une des revendications précédentes, **caractérisé en ce qu'**il utilise un fil de renfort (fil de trame 1) d'environ 100 à 1 000 tex et un fil de maille (fil de maille 2) de 30 à 100 tex.
